(19) Europäisches Patentamt
European Patent Office
Office européen des brevets

(11) **EP 2 793 060 A1**

(12) **EUROPEAN PATENT APPLICATION**
published in accordance with Art. 153(4) EPC

(43) Date of publication:
**22.10.2014 Bulletin 2014/43**

(51) Int Cl.:
*G02B 5/00* (2006.01)  *G03B 9/02* (2006.01)
*G03B 11/00* (2006.01)

(21) Application number: **12858637.7**

(22) Date of filing: **05.12.2012**

(86) International application number:
**PCT/JP2012/007784**

(87) International publication number:
**WO 2013/088675 (20.06.2013 Gazette 2013/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.12.2011 JP 2011271785**

(71) Applicants:
• **Canon Denshi Kabushiki Kaisha**
**Chichibu-shi, Saitama 369-1871 (JP)**
• **Canon Kabushiki Kaisha**
**Tokyo 146-8501 (JP)**

(72) Inventors:
• **SUZUKI, Kazuo**
**Chichibu-shi, Saitama 369-1871 (JP)**

• **OKADA, Ryoko**
**Chichibu-shi, Saitama 369-1871 (JP)**
• **HORIUCHI, Akihisa**
**Ohta-ku, Tokyo 146-8501 (JP)**
• **ABE, Hirofumi**
**Ohta-ku, Tokyo 146-8501 (JP)**
• **MIYAZAWA, Nobuyuki**
**Ohta-ku, Tokyo 146-8501 (JP)**

(74) Representative: **TBK**
**Bavariaring 4-6**
**80336 München (DE)**

(54) **OPTICAL FILTER, LIGHT VOLUME ADJUSTING DEVICE AND IMAGE PICKUP DEVICE HAVING SAME**

(57)   The optical filter (20) includes a filter edge portion (20a) forming a boundary between a region through which a light flux is transmitted and a region through which the light flux is not transmitted. The filter edge portion has a concavo-convex shape whose edge outline is formed by a continuous curved line including convex portions (20b) and concave portions (20c) alternately arranged in a direction in which the boundary extends. The curved line includes part satisfying $\theta a > 60°$. $\theta a$ represents an angle formed by a tangent (LM) at an arbitrary point on the curved line between a top point (T) of one convex portion and a bottom point (B) of one concave portion adjacent to the one convex portion with a tangent (LT) at the top point of the one convex portion, the angle $\theta a$ becoming larger as the arbitrary point becomes farther from the top point.

FIG. 1

**Description**

[Technical Field]

The present invention relates to an optical apparatus such as a video camera, a digital still camera and an interchangeable lens, and particularly to an optical filter, such as an ND (Neutral Density) filter, disposed in an image capturing optical system for forming an object image.

[Background Art]

Image capturing optical systems for forming an object image generally include a flat-plate-shaped optical filter in order to avoid deterioration of optical performance due to diffraction of light passing through a so-called small stop aperture. Examples of such an optical filter include an ND (Neutral Density) filter for reducing the quantity of light transmitted therethrough, a color filter to limit the quantity of light of a specific wavelength and an infrared or ultraviolet cutting filter to limit the quantity of a near-infrared or ultraviolet ray transmitted therethrough.

However, if rays which come from an object and reach an image plane strike an edge portion (end face) of such an optical filter when the optical filter advances or retracts with respect to a light flux which forms an object image, diffraction of the rays occurs, which changes spread of the rays with respect to their traveling direction. The ray which strikes each point (incident point) of the end face of the optical filter travels toward the image plane while spreading in a direction orthogonal to a tangent at each incident point. Therefore, when at least part of the end face of the optical filter has a straight-line shape, the diffraction of the rays occurs concentrically in a direction orthogonal to the straight line. As a result, a high luminance and high contrast ghost is generated which looks like light extending straightly in a specific direction from a high-luminance object; the ghost hinders image capturing.

Furthermore, since recent cameras have increasingly employed an image sensor capable of preventing generation of smear in a vertical (up-and-down) direction even when capturing a high-luminance object, it is necessary that a high luminance and high contrast ghost due to diffraction at the edge portion of the optical filter be not generated which extends especially in the vertical direction of an image capturing frame.

PLT 1 discloses a light quantity control apparatus including an optical filter (ND filter) with an edge portion on which a coating having light-absorbing and anti-reflection characteristics is formed. PLT 2 discloses a light quantity control apparatus including a stop blade and an optical filter, each with an edge portion on which minute sawtooth-shaped non-periodic convexes and concaves are added. PLT 3 discloses a light quantity control apparatus including an optical filter with an edge portion formed in a convex or concave curved shape extending from its right and left ends to its central part. At the central part, a slope angle of the edge portion varies discontinuously and the edge portion is farther from an optical axis than at the right and left ends.

[Prior art documents]

[Patent documents]

[PTL 1] Japanese Patent Laid-Open No. 2007-065109
[PTL 2] Japanese Patent Laid-Open No. 2007-178823
[PTL 3] Japanese Patent Laid-Open No. 2009-186673

[Outline of the invention]

[Problems to be solved by the invention]

The light quantity control apparatus disclosed in PLT 1 can reduce reflected light which is reflected by the edge portion of the optical filter, but cannot suppress diffraction of light occurring at the edge portion. This means that the apparatus cannot prevent generation of a linearly extending ghost caused by the diffraction of light. The minute non-periodic convexes and concaves of the light quantity control apparatus disclosed in PLT 2 have a height of about 0.5 to $10\mu m$. Such minute convexes and concaves have an effect of scattering reflected light, but do not have an effect of sufficiently dispersing an extending direction of a ghost caused by diffraction of light.

The light quantity control apparatus disclosed in PLT 3 is capable of dispersing, to some extent, the extending direction of a high-luminance ghost caused by diffraction of light. This dispersion, however, causes the ghost whose original shape is linear to spread in a fan-like manner, which inevitably makes the ghost noticeable as a flare.

The present invention provides an optical filter capable of sufficiently dispersing the extending direction of the linear high-luminance ghost and to thereby prevent the ghost from hindering image capturing. The present invention further provides an image capturing apparatus including the optical filter.

[Means for solving the problem]

The present invention provides, as one aspect thereof, an optical filter to control light quantity, which specifically is disposed in an image capturing optical system forming an object image so as to cause at least part of a light flux forming the object image. The optical filter includes a filter edge portion forming a boundary between a region through which a light flux is transmitted and a region through which the light flux is not transmitted, the filter edge portion having a concavo-convex shape whose edge outline is formed by a continuous curved line including convex portions and concave portions alternately arranged in a direction in which the boundary extends. The curved line includes part which satisfies the following condition:

$$\theta a \geq 60°$$

where $\theta a$ represents an angle formed by a tangent at an arbitrary point on the curved line between a top point of one convex portion among the convex portions and a bottom point of one concave portion adjacent to the one convex portion among the concave portions with a tangent at the top point of the one convex portion, the angle $\theta a$ becoming larger as the arbitrary point becomes farther from the top point.

The present invention provides, as another aspect thereof, an image capturing apparatus including the image capturing optical system in which the above optical filter is disposed

[Advantageous Effects of Invention]

The optical filter according to the present invention has the filter edge portion having the edge outline formed by the continuous concave and convex curved line which satisfies the condition of $\theta a \geq 60°$. This configuration enables directions of diffraction of light which occurs at the filter edge portion to be effectively dispersed and to thereby suppress the intensity of a ghost. The optical filter thus is capable of suppressing the generation of a linear high-luminance ghost due to the diffraction at the filter edge portion of the optical filter even when performing image capturing of a high-luminance object, which makes it possible to provide a high-quality captured image.

BRIEF DESCRIPTION OF THE DRAWINGS

[Brief Description of Drawings]

FIG. 1 is a front view and an enlarged view of an ND filter that is Embodiment 1 of the present invention.
FIG. 2 shows a configuration of an image capturing apparatus including an aperture stop apparatus provided with the ND filter of Embodiment 1.
FIG. 3 shows a configuration of the stop apparatus provided with the ND filter of Embodiment 1.
FIG. 4 is a front view of an ND filter that is Embodiment 2 of the present invention.
FIG. 5 is a front view of an ND filter that is Embodiment 3 of the present invention.
FIG. 6 is a front view of an ND filter that is Embodiment 4 of the present invention.
FIG. 7 shows simulation results of ghosts generated due to diffraction of light at an edge portion of an optical filter when an angle $\theta a$ is 0, 30, 60 and 90 degrees.
FIG. 8 shows simulation results of ghosts generated due to diffraction of light at the edge portion of the optical filter when the angle $\theta a$ is 60, 75, or 90 degrees.

[Description of Embodiments]

Exemplary embodiments of the present invention will be described below with reference to the accompanied drawings.

[Embodiment 1]

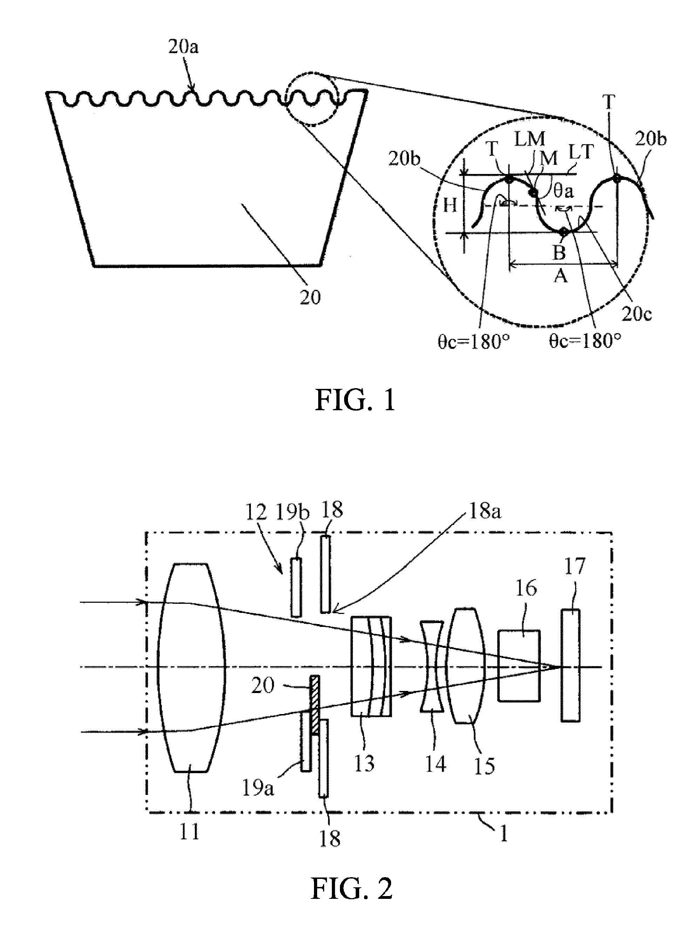

FIG. 2 illustrates the configuration of an image capturing apparatus, such as a video camera and a digital still camera, which is an optical apparatus including a stop apparatus as a light quantity control apparatus that is a first embodiment (Embodiment 1) of the present invention. Although this embodiment will describe a case where the stop apparatus is installed in the image capturing apparatus, the stop apparatus can be installed alternatively in other optical apparatuses such as an interchangeable lens.

The image capturing apparatus 1 includes an image capturing optical system constituted by lenses 11, 13, 14 and 15 and by a stop apparatus 12 disposed between the lenses 11 and 13. Reference numeral 16 denotes a low-pass and infrared cutting filter, and 17 an image sensor such as a charge-coupled device (CCD) sensor or a complementary metal oxide semiconductor (CMOS) sensor.

A light flux from an object (not illustrated) enters the image capturing optical system and then forms an object image on the image sensor 17 by the imaging action of the image capturing optical system. The image sensor 17 photoelectrically converts the object image to output an electrical signal. The image capturing apparatus 1 performs various processes on the electrical signal output from the image sensor 17 at an image processing circuit (not illustrated) to generate a captured image. The captured image is displayed on a monitor (not illustrated) provided to the image capturing apparatus 1 and is recorded in a recording medium, such as a semiconductor memory, removably inserted in the image capturing apparatus 1.

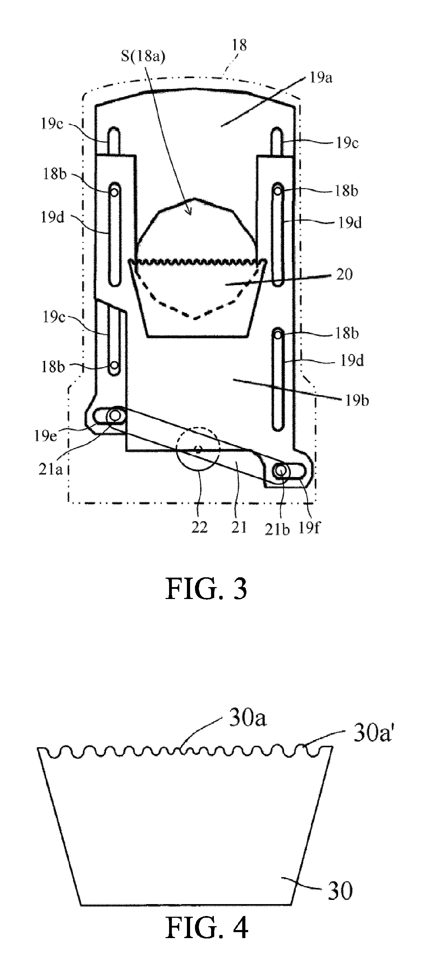

FIG. 3 illustrates the stop apparatus 12 viewed from an optical axis direction of the image capturing optical system. Reference numeral 18 denotes a stop base plate on which a fixed aperture 18a through which the light flux passes is formed. Stop blades 19a and 19b, which are two light-shielding blades, are attached to the stop base plate 18 such that they are movable in directions opposite to each other (up and down directions in the drawing) in a plane orthogonal to the optical axis direction. The stop blades 19a and 19b are combined to form a stop aperture S.

On the two stop blades 19a and 19b, guiding groove portions 19c and 19d are formed, respectively. The engagement of a guiding pin 18b formed on the stop base plate 18 with the guiding groove portions 19c and 19d guides the stop blades 19a and 19b in their movable directions. On the stop blades 19a and 19b, elongated hole portions 19e and 19f into which drive pins 21a and 21b provided at both ends of a driving lever 21 are inserted are respectively formed. The driving lever 21 is rotated by a stop actuator 22, which is constituted by, for example, a stepping motor, to drive the stop blades 19a and 19b in their movable directions via the drive pins 21a and 21b. The drive of the stop blades 19a and 19b changes a diameter (hereinafter referred to as "a stop aperture diameter") of the stop aperture S formed by the stop blades 19a and 19b. The change in stop aperture diameter controls light quantity of the light flux which passes through the fixed aperture 18a, namely, the light quantity of the light flux which passes through the image capturing optical system to reach the image sensor 17.

Of the two stop blades 19a and 19b, the stop blade 19b is provided with an ND (Neutral Density) filter 20 attached thereto. The ND filter 20 reduces light quantity, as an example of optical filters to shield the light flux which passes through the stop aperture S, more specifically, to control the light quantity of the light flux. The ND filter 20 covers part of the stop aperture S when the stop aperture S is in a range from an almost fully opened state illustrated in FIG. 3 to a middle aperture state in which the stop aperture diameter is smaller than that of the almost fully opened state and covers the entire stop aperture S when the stop aperture S is in a small aperture state in which the stop aperture diameter is smaller than that of the middle aperture state. That is, the ND (Neutral Density) filter 20 covers at least part of the stop aperture S whose size (stop aperture diameter) is variable to allow passage of at least part of the light flux which forms the object image.

FIG. 1 illustrates an extracted view and a partial enlarged view of the ND filter 20. As illustrated in FIG. 3, an edge portion of a filter body (filter substrate), more specifically, a filter edge portion 20a to be a boundary between a region where the light flux that forms the object image passes through the ND filter 20 and a region where the light flux that forms the object image does not pass through the ND filter 20 has a concavo-convex shape in which convex portions 20b and concave portions 20c are alternately arranged in a direction in which the boundary extends (right-and-left direction in the drawing). The "boundary between the region where the light flux that forms the object image passes through the ND filter 20 and the region where the light flux that forms the object image does not pass through the ND filter 20" can be rephrased as a boundary between, of the entire ND filter 20, a portion which covers the stop aperture S and a portion which does not cover the stop aperture S. A state in which the ND filter 20 covers part of the stop aperture S so as to form such a boundary is hereinafter referred to also as "the filter edge portion 20a is inserted with respect to the stop aperture S".

Moreover, the concavo-convex shape has an edge outline formed by a continuous curved line. More specifically, in this embodiment, each of the edge outlines of the convex portion 20b and the concave portion 20c is formed so as to have an arc shape whose central angle $\theta c$ is 180 degrees (that is, an arc shape whose central angle $\theta c$ is equal to or larger than 120°). The expression "formed by a continuous curved line" means that the edge outline is formed only by a curved line without including any straight-line portion. This means that, in this embodiment, the concavo-convex shape has an edge outline in which convex arcs and concave arcs whose central angle θc is 180 degrees are alternately connected with one another.

When part of the edge outline, which is the convex portion 20b or the concave portion 20c itself, or an edge outline at a portion where the convex portion 20b and the concave portion 20c are connected with each other) includes a straight-line portion, light from a high-luminance objet present in an image capturing frame is diffracted at the straight-line portion, and the diffracted light concentrates in a direction orthogonal to the straight-line portion. This concentration of the diffracted light generates a linear ghost extending in the direction orthogonal to the straight-line portion.

In contrast, forming the edge outline of the filter edge portion 20a so as to have the shape described in this embodiment enables, even when the light from the high-luminance object is diffracted at the filter edge portion 20a, dispersing a direction of the diffraction of the light, which makes it possible to sufficiently suppress the generation of the high-luminance linear ghost due to the concentration of the diffracted light in a specific direction.

The concavo-convex shape (that is, the curved line of the outer edge portion) is required to satisfy following condition (1) where θa represents an angle that is formed by a tangent LM of the curved line at an intermediate point M as an arbitrary point on the curved line between a top point T of one convex portion 20b and a bottompoint B of one concave portion 20c adjacent to the convex portion 20b with a tangent LT thereof at the top point T and that becomes larger as the intermediate point (arbitrary point) M becomes farther from the top point T:

$$\theta a \geq 60° \quad …(1).$$

In this embodiment, the angle θa formed by the tangent LM at, of the arcs of the convex portion 20b and the concave portion 20c, a portion whose central angle θc is equal to or larger than 120° with the tangent LT varies in a range from 60° to 90°, which satisfies condition (1).

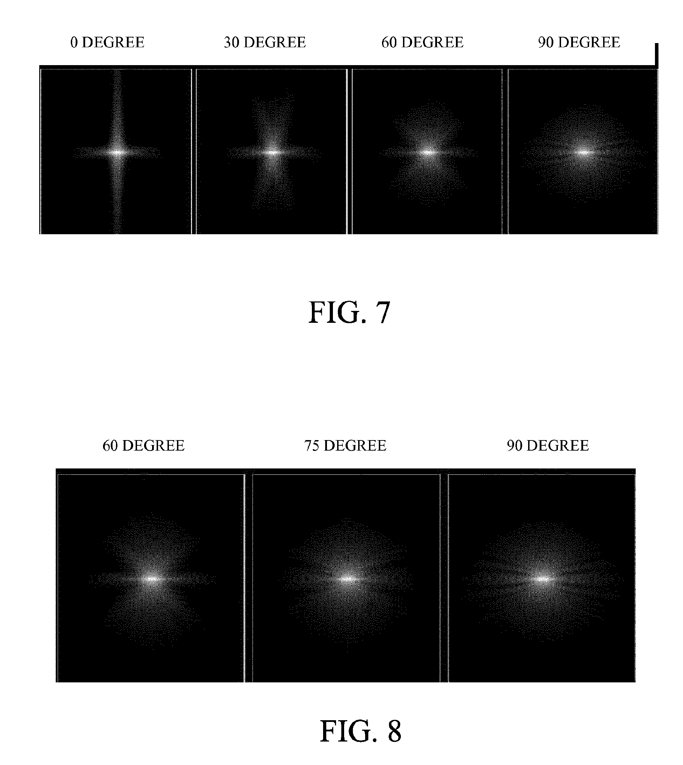

FIGS. 7 and 8 illustrate images as simulation results of a ghost caused by diffraction of light at the filter edge portion. Angles 0°, 30°, 60° and 90°, which are illustrated in FIG. 7, correspond to four types of edge outlines of the optical filter which are set in the simulation, and more specifically to the following edge outlines.

The angle 0° corresponds to a case where the edge outline is a straight line. In this case, the angle θa formed by the tangent of an arbitrary point on the filter edge portion 20a with the tangent of another arbitrary point is 0° even when these arbitrary points are selected at random. When the angle θa is 0°, a linear high-luminance ghost is generated as can be seen from the corresponding simulation image.

The angles 30°, 60° and 90° are possible maximum values of the angle θa formed by the tangent LT at the top point T with the tangent LM at the intermediate point M in FIG. 1.

The angle θa of 90° corresponds to a case where the edge outline has the shape described in Embodiment 1. The angles θa of 30° and 60° respectively correspond to cases where the edge outline formed by convex portions (20b) and concave portions (20c) whose central angle θc of their arc is 60° and 120°.

The optical filter whose angle θa has a maximum value of 30°, that is, whose central angle θc is 60° generates a flare-like ghost in a specific direction due to remaining linear extension of the diffracted light. On the other hand, the optical filter whose angle θa has a maximum value of 60°, that is, whose central angle θc is 120° can sufficiently disperse the diffracted light.

Cases of angles 60°, 75° and 90° illustrated in FIG. 8 are similar to the cases of the angles 30°, 60° and 90° illustrated in FIG. 7. The case of the angle 60° can sufficiently suppress the linear extension of the ghost, and the cases of the angles 75° and 90° can, in addition thereto, isotropically disperse the linear extension thereof.

As can be seen from FIG. 7, the satisfaction of condition (1) can effectively suppress the generation of the linear high-luminance ghost. Furthermore, as can be seen from FIG. 8, the setting of the angle θa to 75 degrees or larger can further effectively suppress the generation of the linear high-luminance. It is desirable that the angle θa be 120° or smaller, that is, the central angle θc of the arc of the convex and concave portions 20b and 20c be 240° or smaller. This is because when the angle θa or θc has a larger value than 120° or 240°, a base part of the convex portion 20b becomes too thin, which may result in a shortage in strength and thereby, for example, the convex portion 20b is easy to bend.

The "continuous curved line" forming the edge outline is not limited to the arc and may be a curved line represented by a function such as an elliptic arc and a parabola or a curved line formed by smoothly-connected arbitrary dots. Also in these cases, the concavo-convex shape is required to satisfy condition (1).

However, it is most desirable to form the edge outlines of the convex portion 20b and the concave portion 20c as arcs whose central angle is 120° or larger and continuously connect them, taking into consideration the effect of suppressing the high-luminance ghost by dispersing the direction of the diffraction at the filter edge portion 20a, ease of manufacture of the ND filter 20, strength thereof and other factors.

Of the filter edge portion 20a, a part to be inserted with respect to the stop aperture S is not necessarily required to have, as a whole, the above-described concave and convex shape. More specifically, it is enough that 50 percent or more, or more desirably 80 percent or more of the entire part (of the filter edge portion 20a) to be inserted with respect to the stop aperture S have the above-described concavo-convex shape as long as the above-described high-luminance ghost caused by the diffraction is not noticeable.

Furthermore, it is desirable that the concavo-convex shape satisfy at least one of following conditions (2) to (4).

First, it is desirable that the concavo-convex shape satisfy following conditions (2) and (3):

$$A \geq 0.1mm \quad \ldots (2)$$

$$0 < A/D < 1.0 \quad \ldots (3)$$

where A represents a distance between the top points T of two convex portions 20b adjacent to each other across one concave portion 20c as shown in FIG. 1, and D represents, when the stop apparatus is disposed in the image capturing optical system, a diameter of an entrance pupil of the image capturing optical system at the stop aperture S.

Conditions (2) and (3) are required to be satisfied in order to more effectively disperse the direction of the diffraction of the light from the high-luminance object at the filter edge portion 20a of the ND filter 20. If a result of A/D exceeds the upper limit of condition (3), the dispersion of the diffracted light becomes insufficient because the number of the convex portions 20b and the concave portions 20c in the entrance pupil is too small. This may make it impossible to sufficiently suppress the linear high-luminance ghost. Moreover, if the value of the distance A falls below the lower limit of condition (2), a burr is likely to be generated in the ND filter 20 during manufacture thereof, which may cause an unnatural ghost due to local reflection or diffraction at a portion of the burr.

Furthermore, it is desirable that the concavo-convex shape satisfy following condition (4):

$$0.1 < H/A < 1.0 \quad \ldots (4)$$

where H represents a distance in a concavo-convex direction (up-and-down direction in the drawing) of the concavo-convex shape between the top point T of one convex portion 20 b and the bottom point B of one concave portion 20c adjacent to the convex portion 20b.

Condition (4) is also required to be satisfied in order to more effectively disperse the direction of the diffraction of the light from the high-luminance object at the filter edge portion 20a of the ND filter 20. If a result of H/A exceeds the upper limit of condition (4), of the edge outline of a paired convex and concave portion formed by the convex portion 20b and the concave portion 20c adjacent thereto, a part which extends in a direction (up-and-down direction in the drawing) orthogonal to a tangent direction (right-and-left direction in the drawing) at the top point T of the convex portion 20b and in directions close thereto has a too large proportion, compared with that of a part which extends in that tangent direction and in directions close thereto. Such a shape is likely to linearly extend the light diffracted at the filter edge portion 20a in the tangent direction at the top point T of the convex portion 20b.

On the other hand, if a result of H/A falls below the lower limit of condition (4), of the edge outline of the paired convex and concave portion, the part which extends in the tangent direction at the top point T of the convex portion 20b and in the directions close thereto has a too large proportion, compared with that of the part which extends in the direction orthogonal to that tangent direction and in the directions close thereto. Such a shape is likely to linearly extend the light diffracted at the filter edge portion 20a in the direction orthogonal to the tangent direction at the top point T of the convex portion 20b.

Changing the numerical ranges of conditions (3) and (4) as shown below makes it possible to further effectively disperse the diffracted light.

$$0 < A/D < 0.5 \quad \ldots (3)'$$

$$0.1 < H/A < 0.8 \quad \ldots (4)'$$

A numerical example (Numerical Example 1) corresponding to this embodiment is shown below, and the relation of Numerical Example 1 and conditions (3) and (4) is shown in Table 1.

(Numerical Example 1)

Curvature radius of arcs of convex and concave portions 20b and 20c: 0.1mm
Distance A: 0.4mm
Distance H: 0.2mm

[Embodiment 2]

FIG. 4 illustrates an ND filter 30 used in a stop apparatus that is a second embodiment (Embodiment 2) of the present invention. The ND filter 30 is, instead of the ND filter 20, attached to the stop blade 19b in the stop apparatus described in Embodiment 1.

Of the ND filter 30 of this embodiment, filter edge portions 30a and 30a', which are inserted with respect to the stop aperture S, have a concavo-convex shape in which convex portions and concave portions are alternately arranged in the right-and-left direction in the drawing (direction in which the boundary described in Embodiment 1 extends). Moreover, the concavo-convex shape has an edge outline formed by a continuous curved line. More specifically, also in this embodiment, the respective edge outlines of the convex and concave portions are formed by arcs whose central angle is 180 degrees, as well as in Embodiment 1.

However, in the filter edge portion (denoted by reference numerals 30a and 30a') in this embodiment, the size of the convex portion and the concave portion varies in the right-and-left direction in the drawing. More specifically, in the right-and-left direction, from a central filter edge portion 30a toward right and left end filter edge portions 30a', the curvature radius of the edge outline of the convex and concave portions increases gradually (or in a stepwise fashion). This increment in the curvature radius of the edge outline of the convex and concave portions results in gradual (or stepwise) increase of the distances A and H, from the central filter edge portion 30a toward the right and left end filter edge portions 30a'.

The concavo-convex shape in this embodiment also satisfies conditions (1) to (4) described in Embodiment 1. A numerical example corresponding to this embodiment (Numerical Example 2) is shown below, and the relation of Numerical Example 2 and conditions (3) and (4) are shown in Table 1.

(Numerical Example 2)

Curvature radius of arcs of convex and concave portions at center (minimum): 0.1mm
at right and left ends (maximum): 0.5mm
Distance A: 0.4mm to 2.0mm
Distance H: 0.2mm to 1.0mm

The distances A and H vary from the central filter edge portion 30a toward right and left end filter edge portions 30a' while maintaining the relation of H/A=0.5 of between an arbitrary convex portion and a convex portion adjacent to the arbitrary convex portion across one concave portion.

Also in this embodiment, as well as in Embodiment 1, even when light from a high-luminance object is diffracted at the filter edge portions 30a and 30a', the direction of the diffraction is dispersed, and thereby the generation of a linear high-luminance ghost due to the concentration of the diffracted light in a specific direction is suppressed.

Moreover, in this embodiment, the curvature radius of the convex and concave portions on the filter edge portion decreases from the right and left end filter edge portions 30a' toward the central filter edge portion 30a, so that the number of the convex and concave portions included in the stop aperture S does not significantly decrease as the stop aperture diameter becomes smaller. Thus, the above effect can be achieved for a smaller stop aperture compared with the case of Embodiment 1.

[Embodiment 3]

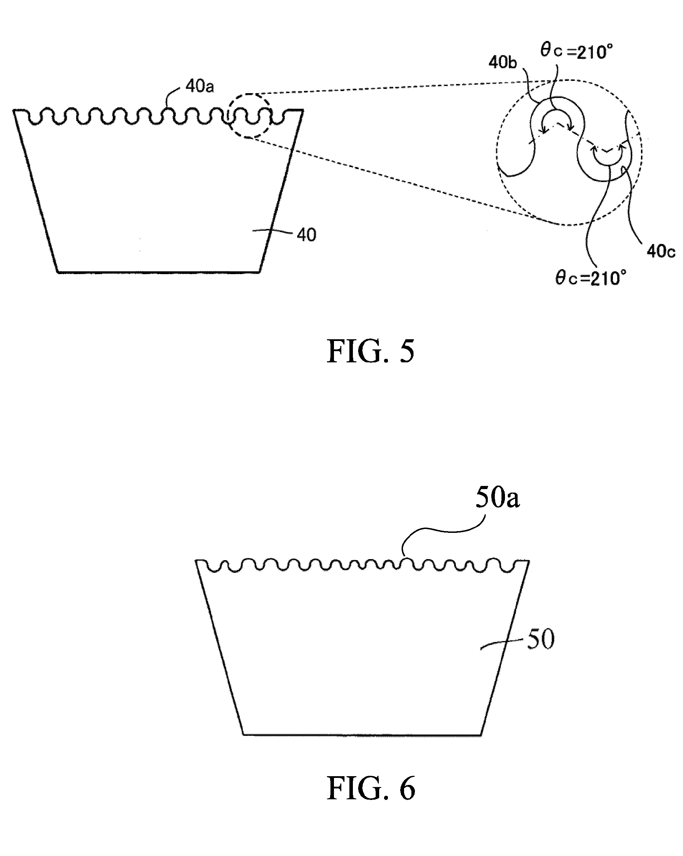

FIG. 5 illustrates an ND filter 40 used in a stop apparatus that is a third embodiment (Embodiment 3) of the present invention and a partial enlarged view thereof. The ND filter 40 is also, instead of the ND filter 20, attached to the stop blade 19b in the stop apparatus described in Embodiment 1.

Of the ND filter 40 of this embodiment, a filter edge portion 40a, which is inserted with respect to the stop aperture S, has a concavo-convex shape in which convex portions 40b and concave portions 40c are alternately arranged in the right-and-left direction in the drawing (direction in which the boundary described in Embodiment 1 extends). The concavo-convex shape has an edge outline formed by a continuous curved line. More specifically, in this embodiment, the respective edge outlines of the convex and concave portions 40b and 40c are formed by arcs whose central angle $\theta c$ is 210 degrees.

In this embodiment, the angle $\theta a$ formed by the tangent LM in a portion, of the arc of each of the convex and concave portions 40b and 40c, where the central angle $\theta c$ is equal to or larger than 140° with the tangent LT varies in a range from 60° to 105°, which satisfies condition (1). As long as the concavo-convex shape of the filter edge portion 40a has the edge outline formed by the continuous curved line as described above, even when each of the convex and concave portions 40b and 40c is shaped so as to have a part where the angle θa exceeds 90 degrees, an effect similar to that of Embodiment 1 can be obtained. As described in Embodiment 1, it is desirable that the angle θa is 120 degrees or smaller.

The concavo-convex shape in this embodiment also satisfies conditions (1) to (4) described in Embodiment 1. A numerical example corresponding to this embodiment (Numerical Example 3) is shown below, and the relation of Numerical Example 3 and conditions (3) and (4) are shown in Table 1.
(Numerical Example 3)

Curvature radius of arcs of convex and concave portions: 0.1 mm
Distance A: 0.386 mm
Distance H: 0.252 mm

[Embodiment 4]

FIG. 6 illustrates an ND filter 50 used in a stop apparatus that is a fourth embodiment (Embodiment 4) of the present invention. The ND filter 50 is also, instead of the ND filter 20, attached to the stop blade 19b in the stop apparatus described in Embodiment 1.

Of the ND filter 50 of this embodiment, a filter edge portion 50a, which is inserted with respect to the stop aperture S, has a concavo-convex shape in which convex portions and concave portions are alternately arranged in the right-and-left direction in the drawing (direction in which the boundary described in Embodiment 1 extends). The concavo-convex shape has an edge outline formed by a continuous curved line. More specifically, also in this embodiment, the respective edge outlines of the convex and concave portions are formed by arcs whose central angle θc is 180 degrees, as well as in Embodiment 1.

However, the sizes of the convex and concave portions of the filter edge portion 50a in this embodiment irregularly vary in the right-and-left direction in the drawing. In other words, the curvature radius of the edge outlines of the convex and concave portions included in the filter edger portion 50a increase and decrease without regularity, from one of the right and left ends toward the other end. Such increase and decrease in the curvature radius of the edge outlines of the convex and concave portions results in irregular increase and decrease of distances A and H from one of the right and left ends toward the other end.

The concavo-convex shape in this embodiment also satisfies conditions (1) to (4) described in Embodiment 1. A numerical example corresponding to this embodiment (Numerical Example 4) is shown below, and the relation of Numerical Example 4 and conditions (3) and (4) are shown in Table 1.
(Numerical Example 4)

Curvature radius of arcs of convex and concave portions: 0.1mm to 0.5mm
Distance A: 0.4mm to 2.0mm
Distance H: 0.2mm to 1.0mm

Also in this embodiment, as well as in Embodiment 1, even when light from a high-luminance object is diffracted at the filter edge portion 50a, the direction of the diffraction is dispersed, and thereby the generation of a linear high-luminance ghost due to the concentration of the diffracted light in a specific direction is suppressed.

Although each of the above embodiments has described the ND filter attached to the stop blade disposed in the light quantity control apparatus, alternative embodiments of the present invention include one in which the stop blade and the ND filter are separately provided in the light quantity control apparatus such that they are driven independently of each other. Furthermore, the alternative embodiments include one in which other filters than the ND filter, such as a color filter to limit the quantity of light of a specific wavelength and an infrared or ultraviolet cutting filter to limit the quantity of an infrared or ultraviolet ray transmitted therethrough, even when they are not disposed in the light quantity control apparatus as long as they are disposed in the image capturing optical system.

In addition, although each of the above embodiments has described the light quantity control apparatus provided with the two stop blades, the alternative embodiments of the present invention include a light quantity control apparatus provided with three or more stop blades.

Moreover, although Embodiments 1, 2 and 4 have described the cases where the centers of the curvature radii of all convex and concave portions of the filter edge portion are located on a straight line, a line connecting the centers of the curvature radii of all convex and concave portions may alternatively be other curved lines such as an arc and a parabola.

Furthermore, although Embodiment 3 has described the case where a line connecting only the centers of the curvature radii of the convex portions and a line connecting only the centers of the curvature radii of the concave portions are straight lines parallel to each other, they may alternatively be curved lines such as arcs or parabolas.

Moreover, although each of the above embodiments has described the case where the optical filter, which is disposed in an image capturing optical system and whose edge portion is inserted into an optical path for forming an object image, is the ND filter disposed in the light quantity control apparatus, the alternative embodiments of the present invention include image capturing apparatuses in which two or more optical filters are disposed in an image capturing optical system.

[Table 1]

|  | Numerical Example 1 | Numerical Example 2 | Numerical Example 3 | Numerical Example 4 |
|---|---|---|---|---|
| 0<A/D<1.0 | 0.033 | 0.033~0.167 | 0.032 | 0.033~0.167 |
| 0.1<H/A<1.0 | 0.500 | 0.500 | 0.653 | 0.500~0.750 |

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

[Industrial Applicability]

The present invention can provide an optical filter and an image capturing apparatus capable of suppressing the generation of a high-luminance ghost even when performing image capturing of a high-luminance object and thereby of providing a high-quality captured image.

[Reference Sings List]

| 17 | image sensor |
|---|---|
| 19a, 19b | stop blade |
| 20, 30, 40, 50 | ND filter |
| 20a, 30a, 30a', 40a, 50a | filter edge portion |
| 20b, 40b | convex portion |
| 20c, 40c | concave portion |

**Claims**

1. An optical filter (20, 30, 40, 50) to control light quantity, comprising:

a filter edge portion (20a, 30a, 40a, 50a) forming a boundary between a region through which a light flux is transmitted and a region through which the light flux is not transmitted, the filter edge portion having a concavo-convex shape whose edge outline is formed by a continuous curved line including convex portions (20b) and concave portions (20c) alternately arranged in a direction in which the boundary extends,
**characterized in that** the curved line includes part which satisfies the following condition:

$$\theta a \geq 60°$$

where $\theta a$ represents an angle formed by a tangent (LM) at an arbitrary point on the curved line between a top point (T) of one convex portion among the convex portions and a bottom point (B) of one concave portion adjacent to the one convex portion among the concave portions with a tangent (LT) at the top point of the one convex portion, the angle $\theta a$ becoming larger as the arbitrary point becomes farther from the top point.

2. An optical filter (20, 30, 40, 50) to be disposed in an image capturing optical system which forms an object image, the optical filter, comprising:

a filter edge portion (20a, 30a, 40a, 50a) forming a boundary between a region through which a light flux is transmitted and a region through which the light flux is not transmitted, the filter edge portion having a concavo-convex shape whose edge outline is formed by a continuous curved line including convex portions (20b) and concave portions (20c) alternately arranged in a direction in which the boundary extends, **characterized in that** the curved line includes part which satisfies the following condition:

$$\theta a \geq 60°$$

where θa represents an angle formed by a tangent (LM) at an arbitrary point on the curved line between a top point (T) of one convex portion among the convex portions and a bottom point (B) of one concave portion adjacent to the one convex portion among the concave portions with a tangent (LT) at the top point of the one convex portion, the angle θa becoming larger as the arbitrary point becomes farther from the top point.

3. An optical filter according to claim 1 or 2, wherein, of the edge outline, each of outline parts corresponding to the convex portions and each of outline parts corresponding to the concave portions both have an arc shape, and a central angle θc of the arc shape satisfies the following condition:

$$\theta c \geq 120°.$$

4. An optical filter (20) according to any one of claims 1 to 3, wherein the concavo-convex shape satisfies the following conditions:

$$A \geq 0.1 mm,$$

and

$$0 < A/D < 1.0$$

where A represents a distance between the top points of two convex portions among the convex portions, the two convex portions being adjacent to each other across one concave portion among the concave portions, and D represents a diameter of an entrance pupil of an image capturing optical system at a stop aperture of a stop apparatus disposed in the image capturing optical system.

5. An optical filter according to any one of claims 1 to 4, wherein the concavo-convex shape satisfies the following condition:

$$0.1 < H/A < 1.0$$

where H represents a distance in a concavo-convex direction of the concavo-convex shape between the top point of the one convex portion and the bottom point of the one concave portion adjacent to the one convex portion, and A represents a distance between the top points of two convex portions including the one convex portion among the convex portions, the two convex portions being adjacent to each other across the one concave portion.

6. An optical filter according to any one of claims 1 to 5, wherein a size of each of the convex and concave portions varies in the direction in which the boundary extends.

7. A light quantity control apparatus in which a size of a stop aperture (S) is variable, the apparatus comprising:

an optical filter (20) according to any one of claims 1 to 6 disposed so as to cover at least part of the stop aperture (S).

8. An image capturing apparatus (1) comprising:

an optical filter (20) according to any one of claims 1 to 6; and
n image capturing optical system configured to form an object image with a light flux from an object.

**FIG. 1**

**FIG. 2**

FIG. 3

FIG. 4

40a

θc =210°

40b

40

40c

θc =210°

## FIG. 5

50a

50

## FIG. 6

0 DEGREE 30 DEGREE 60 DEGREE 90 DEGREE

FIG. 7

60 DEGREE 75 DEGREE 90 DEGREE

FIG. 8

## INTERNATIONAL SEARCH REPORT

| | International application No. |
| --- | --- |
| | PCT/JP2012/007784 |

| A. CLASSIFICATION OF SUBJECT MATTER |
| --- |
| *G02B5/00*(2006.01)i, *G03B9/02*(2006.01)i, *G03B11/00*(2006.01)i |

According to International Patent Classification (IPC) or to both national classification and IPC

| B. FIELDS SEARCHED |
| --- |
| Minimum documentation searched (classification system followed by classification symbols) |
| G02B5/00, G03B9/02, G03B11/00 |

| Documentation searched other than minimum documentation to the extent that such documents are included in the fields searched |
| --- |
| Jitsuyo Shinan Koho          1922–1996    Jitsuyo Shinan Toroku Koho    1996–2013 |
| Kokai Jitsuyo Shinan Koho    1971–2013    Toroku Jitsuyo Shinan Koho    1994–2013 |

| Electronic data base consulted during the international search (name of data base and, where practicable, search terms used) |
| --- |

### C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 2007-065109 A  (Canon Electronics Inc.),<br>15 March 2007 (15.03.2007),<br>paragraphs [0005] to [0008], [0011] to [0012],<br>[0019] to [0031]; fig. 1, 2, 11, 12, 13<br>(Family: none) | 1-2,6-8<br>3-5 |
| Y<br>A | JP 2007-090656 A  (Dainippon Printing Co.,<br>Ltd.),<br>12 April 2007 (12.04.2007),<br>paragraphs [0033] to [0037], [0040], [0065] to<br>[0066]; fig. 7(B), 10(A)<br>(Family: none) | 1-2,6-8<br>3-5 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 08 March, 2013 (08.03.13) | 19 March, 2013 (19.03.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/007784

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2003-004916 A (Dainippon Printing Co., Ltd.),<br>08 January 2003 (08.01.2003),<br>paragraphs [0018], [0043] to [0046], [0053], [0064]; fig. 5(A), 6(A)<br>& US 2003/0011315 A1 | 1-2,6-8<br>3-5 |
| A | JP 5-281590 A (Canon Inc.),<br>29 October 1993 (29.10.1993),<br>entire text; all drawings<br>& US 5422697 A | 1-8 |
| A | JP 2007-178823 A (Canon Electronics Inc.),<br>12 July 2007 (12.07.2007),<br>entire text; all drawings<br>& US 2007/0154207 A1 & CN 101008763 A | 1-8 |
| A | JP 2008-233356 A (Canon Electronics Inc.),<br>02 October 2008 (02.10.2008),<br>entire text; all drawings<br>(Family: none) | 1-8 |
| A | JP 2008-065227 A (Canon Electronics Inc.),<br>21 March 2008 (21.03.2008),<br>entire text; all drawings<br>& US 2008/0297932 A1 & CN 101135743 A | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007065109 A
- JP 2007178823 A

- JP 2009186673 A